# EUROPEAN PATENT SPECIFICATION

(11) **EP 1 742 993 B1**
(45) Date of publication and mention of the grant of the patent: **04.07.2018**
(21) Application number: 04821965.3
(22) Date of filing: 08.04.2004
(51) Int. Cl.: C08K 5/00, C08K 9/08, C08K 9/10, C08L 21/00

(54) **RUBBER COMPOSITION AND TIRE COMPRISING SAME**
KAUTSCHUKMISCHUNG UND REIFEN.
COMPOSITION DE CAOUTCHOUC ET PNEU LA COMPRENANT

(43) Date of publication of application: 17.01.2007
(73) Proprietor: Compagnie Générale des Etablissements Michelin, 63000 Clermont-Ferrand (FR)
(72) Inventor: BAILEY, Rodney, Simpsonville, SC 29681 (US); HETZEL, Peter, Greer, SC 29651 (US)
(74) Representative: Neugebauer, Jürgen
(86) International application number: PCT/US2004/010809
(87) International publication number: WO 2005/108480

(56) References cited:
- US-A- 2 623 079
- US-A1- 2003 165 682

## Description

### Field of the Invention

The present invention is in the field of elastomeric compositions, more particularly in the field of fast-curing rubber compositions for use in rubber articles, such as tires, belts, hoses, and tracks.

### Background of the Invention

The market for retreaded pneumatic tires is almost entirely in the arena of trucking, aircraft, and earthmoving vehicles. In the trucking market, the carcass of a tire is expected to last several hundred thousand miles, and be amenable to having a new tread adhered to it several times. New truck tires are quite expensive, and are therefore bought with the expectation that their high initial costs are offset by the long service life of the carcass, and the low comparative cost of retreading.

A variety of procedures and different types of equipment are available for use in recapping or retreading pneumatic tires. One of the first steps in retreading a worn tire is to remove remaining tread material from the tire carcass, for example, by a sanding procedure known as buffing. Next a layer of green (uncured) rubber, known as "cushion gum," is applied to the carcass. This layer of extruded uncured rubber may be stitched or adhesively bonded to the carcass. Next, a tread layer is applied atop the layer of cushion gum. In the cold recapping process, the tread is cured rubber, and has a tread pattern already impressed in its outer surface. The tire is then placed in an autoclave, and heated under pressure for an appropriate time to induce curing of the gum layer, and binding of the gum layer to the tread and the carcass. In the hot recapping process, the tread is uncured rubber, and has no tread pattern. The tire is then placed in a tire mold and heated under pressure for an appropriate time to cure the gum layer and the tread, and to cause the gum layer to bind with the tread and the carcass. [The term "cure" refers to the formation of cross-links between the elastomer molecules in the rubber compound, otherwise known as vulcanization].

However, in recapping procedures it is often necessary to employ rubber compounds with short vulcanization times. A high cure rate necessitates the use of ultra-accelerators in the rubber compound, which creates challenges for the employment of the compound. The accelerators, at ambient temperature, may begin to react with other components of the compound. They must therefore be stored under refrigeration to prevent premature curing of the compound or evolution of the cure rate. More importantly, the cure rate (also referred to as "cure law") may increase upon green aging of the compound, leading to the need for a process modification or possibly hindering performance of the product.

Various methods have been proposed to prevent premature curing of the cushion rubber compound. These include Japanese Patent No. 48052678 (1973); Japanese Patent No. 48052679 (1973); German Patent Application No. DE19754341 (1999); International Patent No. WO99/27012 (1999); European Patent Application No. EP1034216 (2000); Japanese Patent No. 59022942 (1984); Japanese Patent No. 52069455 (1977). Certain other references have addressed encapsulation of materials: U.S. Pat. No. 4,092,285 (1978); U.S. Pat. No. 6058994 (2000); U.S. Pat. No. 4461854 (1984). None of these methods has proven entirely satisfactory.

Therefore, it would be beneficial to have a rubber composition which did not require refrigeration, and which limited its cure rate change through its useful life, or, better still, which showed no cure rate change through its useful life.

### Summary of the Invention

The present invention is a rubber composition comprising microencapsulated sulfur and free sulfur. The composition is particularly useful as a cushion gum in retreading procedures. In one embodiment of the invention, the composition further comprises one or more ultra-accelerator curing agents for rubber. In another embodiment of the invention, the rubber composition has a t₉₀ (time for completion of 90% of the cure as measured by torque as shown by a rheometer curve) within twenty percent, more preferably within ten percent, and more preferably within five percent of the unaged green rubber composition, after 28 days aging at forty degrees Celsius. (Note that t₉₀ may also be termed tc₉₀) In another embodiment of the invention, the rubber composition has a t₀ (time for onset of 0% of the cure as measured by torque) within twenty percent, more preferably within ten percent, and more preferably within five percent of the unaged green rubber composition, after 28 days aging at forty degrees Celsius. In another embodiment of the invention, approximately between forty and fifteen percent, more preferably between thirty and twenty percent, and more preferably approximately twenty-five percent by weight of the sulfur in the composition is encapsulated.

Another embodiment of the invention is a tire comprising the rubber composition of the invention. Another embodiment of the invention is a recapped or repaired tire comprising the rubber composition of the invention. A further embodiment of the invention is a method of retreading a tire comprising application of the rubber composition of the invention between the tire tread and the carcass of a tire. A further embodiment of the invention comprises a method of repairing a tire comprising application of the rubber composition of the invention to a defect in the tire. A further embodiment comprises repair of rubber articles using the composition.

### Brief Description of the Figures

Figure 1 shows the percent change in t₉₀ versus the percentage of microencapsulated sulfur in the composition.
Figure 2 shows the percent change in t₉₅ versus the percentage of microencapsulated sulfur in the composition.
Figure 3 shows percent change in t₀ versus the percentage of microencapsulated sulfur in the composition.
Figure 4 shows the percent change in tc₉₀ for various rubber mixes.

### Detailed Description of the Invention

The present invention is a rubber composition comprising microencapsulated sulfur and free sulfur. The composition is particularly useful as a cushion gum in retreading procedures. In one embodiment of the invention, the composition further comprises one or more ultra-accelerator curing agents for rubber. In another embodiment of the invention, the rubber composition has a t₉₀ (time for completion of 90% of the cure as measured by torque as shown by a rheometer curve) within twenty percent, more preferably within ten percent, and more preferably within five percent of the unaged green rubber composition, after 28 days aging at forty degrees Celsius. (Note that t₉₀ may also be termed tc₉₀) In another embodiment of the invention, the rubber composition has a t₀ (time for onset of 0% of the cure as measured by torque) within twenty percent, more preferably within ten percent, and more preferably within five percent of the unaged green rubber composition, after 28 days aging at forty degrees Celsius. In another embodiment of the invention, approximately between forty and fifteen percent, more preferably between thirty and twenty percent, and more preferably approximately twenty-five percent by weight of the sulfur in the composition is encapsulated.

Another embodiment of the invention is a tire comprising the rubber composition of the invention. Another embodiment of the invention is a recapped or repaired tire comprising the rubber composition of the invention. A further embodiment of the invention is a method of retreading a tire comprising application of the rubber composition of the invention between the tire tread and the carcass of a tire. A further embodiment of the invention comprises a method of repairing a tire comprising application of the rubber composition of the invention to a defect in the tire. A further embodiment comprises repair of rubber articles using the composition.

The present invention permits storage of the rubber composition, particularly useful for retreading of tires, at ambient temperatures, obviating the need for refrigeration. Furthermore, said rubber mix can maintain the same cure rate through storage at ambient temperature, simplifying retreading operations.

The composition in accordance with the invention may further include the customary fillers and additives such as, for instance, carbon black, silica, silicic acid, zinc oxide, stearic acid, cobalt salts, resins, protective agents such as antioxidants, extender oils, tackifying agents, and various processing agents.

### 19₀and t₀

ASTM D2084 and ISO 3417 describe how to measure cure times (time t₀ for the onset of cure, and time t₉₀ for 90% completion of cure) for rubber compounds using an oscillating rheometer. These standards are incorporated by reference.

In other embodiments of the invention, the t₉₀ would be within 1%, 2%, 5%, 10%, 15%, 20%, 25%, 30%, 35%, 40%, 45%, and 50% of the unaged green rubber composition.

In other embodiments of the invention, the t₀ would be within 1%, 2%, 5%, 10%, 15%, 20%, 25%, 30%, 35%, 40%, 45%, and 50% of the unaged green rubber composition.

Note that "within 5%" for instance, means that the difference between the new value and the original value is less than five percent of the original value.

### The Aging test

The curing curve is measured before aging according to specific conditions. The aging test is performed by placing an uncured sample of the rubber in a laboratory oven typically 40 degrees Celsius. The uncured compound is aged in these conditions for several days, zero to 28 days, then the curing curve is measured in the same condition as with the unaged sample, to determine the "green stability" of the compound.
1. The uncured mix was milled to a thickness comparable to the actual production thickness. The samples described herein were milled to a thickness of 5 - 9 mm on a laboratory mill (the mix temperature must remain below 70 degrees Celsius during processing).
2. Samples milled to the specified thickness were placed in a laboratory oven (held at a temperature of 40 degrees Celsius) for a period 0-4 weeks.
3. Samples were removed from the oven at weekly intervals for rheometer testing. The evolution the cure system was measured by comparing the t₉₀ (unaged) to the t₉₀ data obtained at 28 day intervals.

### Rubber

"Diene" elastomer or rubber is understood to mean, in known manner, an elastomer resulting at least in part (i.e., a homopolymer or a copolymer) from diene monomers (monomers bearing two double carbon-carbon bonds, whether conjugated or not).

In general, "essentially unsaturated" diene elastomer is understood here to mean a diene elastomer resulting at least in part from conjugated diene monomers, having a content of members or units of diene origin (conjugated dienes) which is greater than 15% (mol %).

Thus, for example, diene elastomers such as butyl rubbers or copolymers of dienes and of alpha-olefins of the EPDM type do not fall within the preceding definition, and may in particular be described as "essentially saturated" diene elastomers (low or very low content of units of diene origin which is always less than 15%).

Within the category of "essentially unsaturated" diene elastomers, "highly unsaturated" diene elastomer is understood to mean in particular a diene elastomer having a content of units of diene origin (conjugated dienes) which is greater than 50%.

These definitions being given, the following are understood more particularly to be meant by diene elastomer capable of being used in the compositions according to the invention:
(a) - any homopolymer obtained by polymerization of a conjugated diene monomer having 4 to 12 carbon atoms;
(b) - any copolymer obtained by copolymerization of one or more dienes conjugated together or with one or more vinyl aromatic compounds having 8 to 20 carbon atoms;
(c) - a ternary copolymer obtained by copolymerization of ethylene, of an α-olefin having 3 to 6 carbon atoms with a non-conjugated diene monomer having 6 to 12 carbon atoms, such as, for example, the elastomers obtained from ethylene, from propylene with a non-conjugated diene monomer of the aforementioned type, such as in particular 1,4-hexadiene, ethylidene norbornene or dicyclopentadiene;
(d) - a copolymer of isobutene and isoprene (butyl rubber), and also the halogenated, in particular chlorinated or brominated, versions of this type of copolymer.

Suitable conjugated dienes include 1,3-butadiene, 2-methyl-1,3-butadiene, 2,3-di(C₁-C₅ alkyl)-1,3-butadienes such as, for instance, 2,3-dimethyl-1,3-butadiene, 2,3-diethyl-1,3-butadiene, 2-methyl-3-ethyl- 1,3 -butadiene, 2-methyl-3 -isopropyl-1,3-butadiene, an aryl-1,3-butadiene, 1,3-pentadiene and 2,4-hexadiene. Suitable vinyl aromatic compounds are, for example, styrene, ortho-, meta- and para-methylstyrene, the commercial mixture "vinyltoluene", para-tert.-butylstyrene, methoxystyrenes, chlorostyrenes, vinylmesitylene, divinylbenzene and vinylnaphthalene.

The copolymers may contain between 99% and 20% by weight of diene units and between 1% and 80% by weight of vinyl aromatic units. The elastomers may have any microstructure, which is a function of the polymerization conditions used, in particular of the presence or absence of a modifying and/or randomizing agent and the quantities of modifying and/or randomizing agent used. The elastomers may for example be block, statistical, sequential or microsequential elastomers, and may be prepared in dispersion or in solution; they may be coupled and/or starred or alternatively functionalised with a coupling and/or starring or functionalising agent.

Polybutadienes are suitable, for example those having a content of 1,2-units of between 4% and 80%, or those having a cis-1,4 content of more than 80%, polyisoprenes, butadiene-styrene copolymers, and those having a styrene content of between 5% and 50% by weight, butadiene-isoprene copolymers, including those having an isoprene content of between 5% and 90% by weight, isoprene-styrene copolymers and those having a styrene content of between 5% and 50% by weight.

In summary the diene elastomer of the composition according to the invention may be selected from the group of highly unsaturated diene elastomers which consists of polybutadienes (BR), polyisoprenes (IR), natural rubber (NR), butadiene copolymers, isoprene copolymers and mixtures of these elastomers.

Such copolymers may also be selected from the group which consists of butadiene-styrene copolymers (SBR), butadiene-isoprene copolymers (BIR), isoprene-styrene copolymers (SIR) and isoprene-butadiene-styrene copolymers (SBIR).

The compositions of the invention may contain a single diene elastomer or a mixture of several diene elastomers, the diene elastomer or elastomers possibly being used in association with any type of synthetic elastomer other than a diene elastomer, or even with polymers other than elastomers, for example thermoplastic polymers.

### Ultra-accelerators

Rubber compositions which are intended for use as cushion gum, and those used as repair mixes, must present rapid curing at low temperatures with high yields. Therefore, in addition to vulcanization accelerators, ultra-accelerators are added to the composition. One classification of accelerators is as follows:

### Relative Vulcanization

| **Type** | **Time at 284°F** | **Examples** |
|---|---|---|
| **Slow** | **90 - 120 minutes** | **Aniline** |
| **Moderately fast** | **Circa 60 min** | **Diphenylguanidine Hexamethylene tetramine** |
| **Fast** | **Circa 30 min** | **Mercaptobenzothiazole Benzothiazyl disulfide** |
| **Ultra-accelerators** | **Several minutes** | **Thiurams Dithiocarbamates Xanthates** |

H. L. Stephans in "The Compounding and Vulcanization of Rubber", Chapter 2, Rubber Technology 3rd edition, edited by Maurice Morton, 1987 . Suitable vulcanization ultra-accelerators include thiurams, xanthates, dithiocarbamates, dithiophosphates, and combinations thereof. More specifically, these include, but are not limited to:
- tetramethylthiuram monosulphide (TMTM), tetramethylthiuram disulphide, tetraethylthiuram disulfide (TETD), tetrabenzylthiuram disulfide (TBzTD)
- zinc isopropyl xanthate (ZIX), sodium isopropyl xanthate (SIX), zinc butyl xanthate (ZBX), dibutyl xanthogen disulfide, diethyl xanthogenate, diisopropyl xanthogen disulfide, diisobutyl xanthogen disulfide,
- zinc-N-dimethyl-dithiocarbamate (ZDMC), zinc-N-diethyldithiocarbamate (ZDEC), zinc-N-dibutyl-dithiocarbamate (ZDBC), zinc-N-ethylphenyl-dithiocarbamate (ZEBC), zinc-N-pentamethylene dithiocarbamate (ZPMC), Piperidine pentamethylene dithiocarbamate (PPD), Sodium diethyl dithiocarbamate (SDC)
- copper diisopropyl dithiophosphate, zinc-O-,O-di-n-butylphosphorodithioate

Other suitable accelerators may be used in the rubber composition, such as: thiazoles, sulphenamides, guanidines, thiourea derivatives, amine derivatives, and combinations thereof. These include, but are not limited to: benzothiazyl-2-cyclohexyl sulphenamide (CBS), benzothiazoyl-2-tert.-butyl sulphenamide (TBBS), 2-mercaptobenzothiazole (MBT), zinc or sodium salt of 2-mercaptobenzothiazole (ZMBT), benzothiazyl-2-sulphene morpholide (MBS), benzothiazyldicyclohexy-1 sulphenamide (DCBS), diphenyl guanidine (DPG), Triphenyl guanidine (TPG), diorthotolyl guanidine (DOTG), o-tolylbigaunide (OTBG), , ethylene thiourea (ETU), diethylthiourea (DETU), diphenyl thiourea (DPTU), benzothiazole disulfide (MBTS), hexamethylene tetramine (HMT), ethylidene aniline (EA), and mixtures thereof.

A combination of primary, secondary, and tertiary accelerators may be used to obtain the desired cure rate.

### Sulfur

The sulfur used is known variously as pulverized sulphur, rubber maker's sulphur, commercial sulphur. The specific sulfur employed in the examples was a commercially available sulfur. In certain embodiments of the invention, the sulfur is microencapsulated in the following amounts by weight: between approximately 1% to approximately 5%, between approximately 5% to approximately 10%, between approximately 10% to approximately 15%, between approximately 15% to approximately 20%, between approximately 20% to approximately 25%, approximately 25%, between approximately 25% to approximately 30%, between approximately 30% to approximately 35%, between approximately 35% to approximately 40%, between approximately 45% to approximately 50%, between approximately 50% to approximately 55%, between approximately 55% to approximately 60%, between approximately 50% to approximately 60%, between approximately 60% to approximately 65%, between approximately 65% to approximately 70%, between approximately 60% to approximately 70%, between approximately 70% to approximately 75%, between approximately 75% to approximately 80%, between approximately 70% to approximately 80%, between approximately 80% to approximately 85%, between approximately 85% to approximately 90%, between approximately 80% to approximately 90%, between approximately 90% to approximately 95%.

### Encapsulation Agents

"Micro encapsulation means 'to enclose in microcapsules' (The American Heritage® Dictionary of the English Language, Fourth Edition). However, in broader industrial terms, the modern origin of 'micro encapsulation' lies in the food and pharmaceutical sectors. Micro encapsulated materials are common in the food and pharmaceutical industries, but in almost all cases the encapsulation is designed to last either for a specific period or until destroyed by a specific trigger (i.e., crushing, rubbing, dissolution, temperature). In these applications, individual particles are coated by the encapsulating agent, and indeed the simplest definition of 'micro encapsulation' is the encasing of small particles within a shell of impermeable material.

Microencapsulation is the envelopment of small, solid particles, liquid droplets, or gas bubbles with a coating, usually a continuous coating. Many terms are used to describe the contents of a microcapsule such as active agent, active core, core material, fill, internal phase, nucleus, and payload. The coating material used to form the outer surface of the microcapsule is called a coating membrane, shell, or wall. It may be an organic polymer hydrocolloid, sugar, wax, metal, or inorganic oxide. Microcapsules usually fall in the size range of between 1 and 2000 microns, although smaller and larger sizes are known. Curt Thies, in Encyclopedia of Polymer Science and Engineering, Vol. 9, ed. H. Mark [John Wiley & Sons, New York, 2d edition, 1987), incorporated herein by reference.

In one embodiment of the invention, a microencapsulation material is selected that has a thermal transition temperature between the processing temperature and the curing temperature of the rubber composition. Note that, in one embodiment of the invention, the thermal transition temperature refers to the glass transition temperature of the microencapsulating material. In another embodiment of the invention, a man of skill in the art might refer to the softening point of the material, the melting point of the material, or the VICAT softening temperature (see ASTM D 1525). In one embodiment of the invention, the processing temperature is less than or equal to about 70 degrees Celsius, and the curing temperature is greater than or equal to about 125 degrees Celsius.

For the temperature parameters of one embodiment of the invention (70 degrees Celsius to 125 degrees Celsius), waxes, paraffins, polyethylene (PE), ethylene-vinyl acetate copolymers, polyvinyl alcohols (PVA) and mixtures of these may be employed. Also suitable are polyacrylic acid and derivatives, polyethylene oxide, polymethylmethacrylate (PMMA), polyvinyl acetate, thermoplastic polymers.

The processing temperature, [calendering and extrusion] for the rubber compound used for recapping is typically less than 70°C but can be in the range of 50 - 90°C. The curing temperature is typically 125°C but can be in a range of 100 - 170°C. The polymeric matrix materials for the microcapsule are selected using the knowledge of the maximum processing temperature and the curing temperature. In one embodiment of the invention, the encapsulation material is selected on the basis of the glass transition temperature. In another embodiment of the invention, the VICAT softening temperature [ASTM D1525, temperature at which a standard indenter penetrates into the surface of the test specimen under load] is employed to give additional information. The glass transition temperature of the encapsulating polymer should be above the maximum processing temperature of the rubber composition but below the curing temperature. These material properties prevent the reaction of the active product (sulfur in this case) from occurring at temperatures below the curing temperature. See "Glass Transition Temperature of Polymers," Chapter VI in Polymer Handbook 4th edition, ed. by J. Brandrup, E. H. Imergut and E. A. Grulke (John Wiley & Sons, NY), incorporated herein by reference.

The glass transition temperatures of the polymers was measured using Differential Scanning Calorimetry. Heat flow calorimetry was performed using a Seiko Instruments Inc. (Austin, Texas) Differential Scanning Calorimeter. The polymer samples were heated at a scanning rate of 20 °C/min between 30 and 300°C, to allow the determination of the glass transition temperature (Tg). The Tg is indicated by a discontinuity in the heat capacity (Cₚ), curve. (see, e.g. http://www.psrc.usm.edu/macrog/dsc).

Some typical glass transitions temperatures for polymer are:

| **Polymer** | **Glass Transition Tg (°C)** |
|---|---|
| **Polystyrene** | **90 - 100** |
| **Polymethylmethacrylate (syndiotactic)** | **115** |
| **Poly bisphenol A carbonate** | **150** |

In one embodiment of the invention, polymers which have a glass transition temperature between 70 °C and 125°C may be employed as encapsulation agents. [Polymer Handbook 4th Edition (John Wiley & Sons, New York 2003); Mat Web (www.matweb.com)].

Suitable polymers include natural polymer, carbohydrates, polyacetals, polyesters, polybenzoxazoles, polypyrazoles, polyacrylics, polymethacrylics, polyalkenes, polystyrenes, polyvinyl alcohols, polyvinyl ketones, polyphenylenes and combinations thereof. More specifically, these include, but are not limited to: amylose tributyrate, cellulose, cellulose laurate, cellulose triacetate, gelatin, poly(1,3-dioxa-4,6-cyclohexylenemethylene), poly(acrylic acid), poly(2-methyl-1,3-dioxa-4,6-cyclohexylenemethylene), poly(benzoxazole), poly(4-biphenylyl acrylate), poly (tert-butyl acrylate), poly (acrylonitrile methacrylate), poly(2-hydroxypropyl methacrylate), poly(2-hydroxyethyl methacrylate), poly(isopropyl methacrylate) atactic, poly(isopropyl methacrylate) syndiotactic, poly(phenyl methacrylate), poly(3,3,5-trimethylcyclohexyl methacrylate), poly(cyclohexylethylene), poly[(cyclohexylmethyl)ethylene)], poly(2-chlorostyrene), poly(cyclopentylethylene), poly(ispropylethylene) isotactic, poly(3-chlorostyrene), poly(4-chlorostyrene), poly(2-ethylstyrene), poly(3-methylstyrene), poly(4-acetylstyrene), poly(4-benzoylstyrene), poly(5-tert-butyl-2-methylstyrene), poly(4-sec-butylstyrene), poly(2,4-dimethylstyrene), poly(3,4-dimethylstyrene), poly(3,5-dimethylstyrene), poly(4-ethoxylstyrene), poly(3-hydroxymethylstyrene), poly(4-tert-butylbenzoylethylene), poly(2,5-dimethyl-1,4-phenylene ethylene), poly(1,4-phenylene ethylene), polymethylmethacrylate (PMMA), polystyrene (PS), cellulose acetate propionate, cellulose acetate, polyamide 66 (Nylon), polyethylene terephthalate (PET), polyethylene terephthalate glycol (PETG), polycyclohexylene methylene terephthalate polyester (PCTG), polyphenylene sulfide (PPS). Suitable copolymers include, but are not limited to: acrylonitrile butadiene styrene (ABS), polycarbonate - polyethylene terephthalate (PC-PET), and polyvinyl chloride acrylic alloys. These polymers and copolymer include, but are not limited to, the following commercial polymers: Dow Styron 612, BASF Plystol 158K, Enichem Edistin N1461, Dow Magnum 213 ABS, Eastman Tenite Propionate 383A-08, Eastman Eastalloy DA107, Eastman Eastar GN101 and Eastman Eastar DN004.

### Methods of microencapsulation

Methods of microencapsulation are described in: Watts, P. J., Davies, M.C. and C. D. Melia, "Microencapsulation using Emulsification/Solvent Evaporation: An Overview of Techniques and Applications", Critical Reviews in Therapeutic Drug Carrier Systems Vol. 7, Issue 3 (1990), pp. 235 - 259; Herbig, J. A. and J. F. Hanny, "Process for Making Minute Capsules and Prefabricated System Useful Therein", U.S. Patent No. 3,732,172; May 8, 1973; Legrand, J., Brujes, L., Garnelle, G., and P. Phalip, "Study of a microencapsulation process of a virucide agent by solvent evaporation technique", J. Microencapsulation, 1995, Vol. 12, No.6, 639-649; Cleland, J. L., "Solvent Evaporation Process for the Production of Controlled Release Biodegradable Microsphere Formulations for Therapeutics and Vaccines", Biotechnol. Prog. 1998, vol.14, pp. 102-107; Amsden, B., "The Production of Uniformly Sized Polymer Microspheres", Pharmaceutical Research, Vol. 16, No. 7, 1999, pp 1140-1143; Fong; Jones W., "Microspheres, prepared by solvent removal from an oil-in-water emulsion using carboxylic acid salt surfactant, e.g., sodium oleate as the emulsifier," U.S. Patent No. 4,384,975, May 24, 1983; Sato, T., Kanke, M., Shroeder, H. G., and P. P. Deluca, "Porous Biodegradable Microspheres for Controlled Drug Delivery. I. Assessment of Processing Conditions and Solvent Removal Techniques", Pharmaceutical Research, Vol. 5, No. 1, 1988, pp. 21-30; Jorda; Rafael, Autant P. and R. Rossin "Microcapsules containing at least one active ingredient, application of such capsules and one of their preparation methods", U.S. Patent No. 5,585,050; December 17, 1996; Rossling; Georg, Albayrak; C.; Tack; J. and Schmitz; R., "Method of producing morphologically uniform microcapsules and microcapsules produced by this Method", U. S. Patent No. 6,294,204, September 25, 2001; Sawaoka; R., Kouchi, S., and T. Muraki, "Microcapsule-type curing agent, method for producing the same, thermosetting resin composition, prepreg and fiber reinforced composite material" U. S. Patent No. 5,726,222, March 10, 1998, Assignee: Toray Industries, Inc. (JP); Tice, T. R. and D. H. Lewis, "Microencapsulation process", U.S. Patent No. 4,389,330, June 21, 1983; Thanoo, B. C., Sunny, M. C. and A. Jayakrishnan, "Oral Sustained-release Drug Delivery Systems using Polycarbonate Microspheres Capable of Floating on the Gastric Fluid", J. Pharm. Pharmacol. 1993, 45: 21-24; Tice, T. R. and R. M. Gilley, "Preparation of injectable controlled release microcapsules by solvent evaporation process," J. Controlled Release (2) 343, 1985; Teft, J. and D. R. Friend, "Polymeric Microspheres for Controlled-Release Herbicide Formulations," in Polymer Delivery Systems, El-Nokay M. A., Piatt, D. M. and Charpentier, B. A. eds. ACS Symposium Series No. 520; ACS: Washington, D.C. 1993; pp. 190 - 201; DeLuca, P. et al., "Biodegradable Polyester for Drug and Polypeptide Delivery, in Polymer Delivery Systems, El-Nokay M. A., Piatt, D. M. and Charpentier, B. A. eds.; ACS Symposium Series No. 520; ACS: Washington, D.C. 1993; pp. 53 - 79; Mathiowitz, E. and R. Langer, "Multiwall Polymeric Microcapsules", WO Patent 88/0830, Nov. 3, 1988; Pekarek, K. J., Jacob J. S. and E. Mathiowitz, "Double-walled Polymeric Microspheres for Controlled Drug Release", Nature, Vol. 367, pp. 258 - 260, Jan. 20, 1994. Particle sizes were measured using a Malvern Mastersize 2000, Malvern Instruments Ltd., Worcestershire, UK. In one embodiment of the invention, particles were generally less than 200 microns in diameter, and preferably less than 50 microns in diameter.

### Fillers

Useful fillers include carbon black, and so-called white, or inorganic fillers. The white or inorganic filler used as reinforcing filler may constitute all or only part of the total reinforcing filler, in this latter case associated, for example, with carbon black.

In the present application, "reinforcing inorganic filler", in known manner, is understood to mean an inorganic or mineral filler, whatever its colour and its origin (natural or synthetic), also referred to as "white" filler or sometimes "clear" filler in contrast to carbon black, this inorganic filler being capable, on its own, without any other means than an intermediate coupling agent, of reinforcing a rubber composition intended for the manufacture of tires, in other words which is capable of replacing a conventional tyre-grade carbon black filler in its reinforcement function.

The reinforcing inorganic filler may be a mineral filler of the siliceous or aluminous type, or a mixture of these two types of fillers.

The physical state in which the reinforcing inorganic filler is present is immaterial, whether it be in the form of a powder, microbeads, granules or alternatively balls. Of course, "reinforcing inorganic filler" is also understood to mean mixtures of different reinforcing inorganic fillers, in particular of highly dispersible siliceous and/or aluminous fillers such as described above.

The reinforcing inorganic filler may also be used in a blend (mixture) with carbon black. Suitable carbon blacks are any carbon blacks, including the blacks of the type HAF, ISAF and SAF, which are conventionally used in tires, and particularly in treads for these tires. As non-limitative examples of such blacks, mention may be made of the blacks N115, N134, N234, N339, N347 and N375. The amount of carbon black present in the total reinforcing filler may vary within wide limits, this amount in one embodiment being less than the amount of reinforcing inorganic filler present in the rubber composition.

### Preparation of the rubber compositions

The compositions are produced in suitable mixers, in a manner known to the person skilled in the art, typically using two successive preparation phases, a first phase of thermomechanical working at high temperature, followed by a second phase of mechanical working at lower temperature, as described, for example, in the applications EP-A-0 501 227, EP-A-0 810 258 or WO99/28376.

The first phase of thermomechanical working (sometimes referred to as "non-productive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120°C and 190°C, more narrowly between 130°C and 180°C, is reached.

This first phase may itself comprise a single or several thermomechanical working stages, separated for example by one or more intermediate cooling stages. The various ingredients of the composition, elastomer(s), reinforcing filler and its coupling agent, and the various other components ("additives") may be incorporated in the mixer in one or more steps, either during the first thermomechanical stage, or staggered during the various thermomechanical stages, if applicable. The total duration of this thermomechanical working (typically between 1 and 20 minutes, for example between 2 and 10 minutes) is selected according to the specific operating conditions, in particular the maximum temperature selected, the nature and volume of the constituents, the important thing being that a good dispersion of the various ingredients which inter-react is obtained in the elastomeric matrix, thus permitting firstly good processing of the composition in the uncured state, then a sufficient level of reinforcement, after curing, by the reinforcing filler and its intermediate coupling agent.

After cooling of the mixture thus obtained, a second phase of mechanical working is then implemented, at a lower temperature. Sometimes referred to as "productive" phase, this finishing phase consists of incorporating by mixing the vulcanization (or cross-linking) system (sulphur and accelerator(s)), in a suitable device, for example an open mill. It is performed for an appropriate time (typically between 1 and 30 minutes, for example between 2 and 5 minutes) and at a sufficiently low temperature (typically less than 120°C, for example between 60°C and 100°C), in all cases lower than the vulcanization temperature of the mixture, so as to protect against premature vulcanization (scorching).

After the mixing steps, described briefly above, the final composition thus obtained can then calendered, for example in the form of a film or a sheet, in particular for characterization in the laboratory, or alternatively extruded, in order to form for example a rubber profiled element or a repair material.

It goes without saying that the invention relates to the rubber compositions previously described, both in the "uncured" state (i.e. before curing) and in the "cured" or vulcanized state (i.e., after cross-linking or vulcanization).

Of course, the compositions according to the invention may be used alone or in a blend with other rubber compositions which can be used for manufacturing tires.

### Rubber Composition

In one embodiment of the invention, a typical rubber composition is made as follows:
0-100 phr dienic elastomer or mixture of dienic elastomers
0-60 phr filler
0-35 phr aromatic oils (including naphthenic and paraffinic oils)
0-4 phr antidegradant/ antiozonant
0.5 to 3 parts stearic acid
0-3 phr primary, secondary or tertiary accelerator, or a mixture (from 5% to 90% of this microencapsulated)
0.2-3 phr ultra accelerator (from 5% to 90% of this microencapsulated)
0-4 phr sulfur (from 5% to 90% of this microencapsulated)
0-5 phr zinc oxide
0-5 phr tackifying resin

### Explanation of Figures

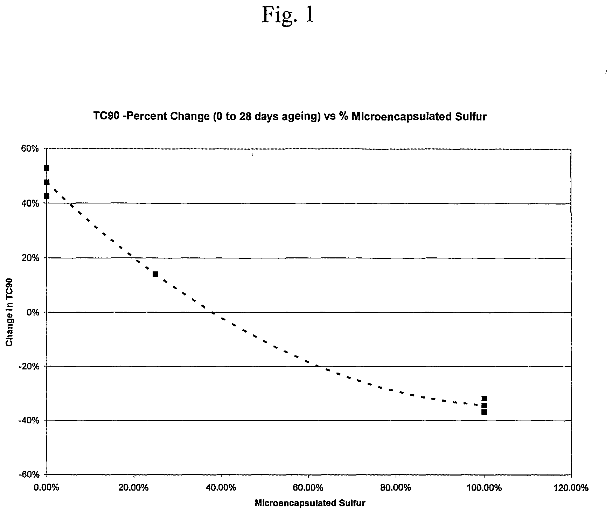

Fig. 1 shows the percent change in t₉₀ after ageing for 28 days for compounds containing different percentages of microencapsulated sulfur versus free sulfur (that is, a certain percentage of the total amount of sulfur by weight was microencapsulated). The curve shows that the percent change in t₉₀ after ageing can be adjusted by varying the ratio of microencapsulated sulfur to free sulfur. Compounds with no microencapsulated sulfur exhibit an increase in the t₉₀ of greater than 40% when aged for 28 days. The t₉₀ for a compound containing 100% microencapsulated sulfur was shortened by approximately 30% when compared with the unaged compound. This curve establishes a relationship between the percent microencapsulated sulfur in the rubber compound and its ageing behavior as measured by t₉₀. Using this relationship, stable rubber compounds (i.e. compounds with a 0% change in t₉₀ during ageing) can be formulated. This curve shows that a compound containing approximately 40% microencapsulated sulfur and approximately 60% sulfur would be a stable compound and exhibit a 0% change in t₉₀ after aging for 28 days.

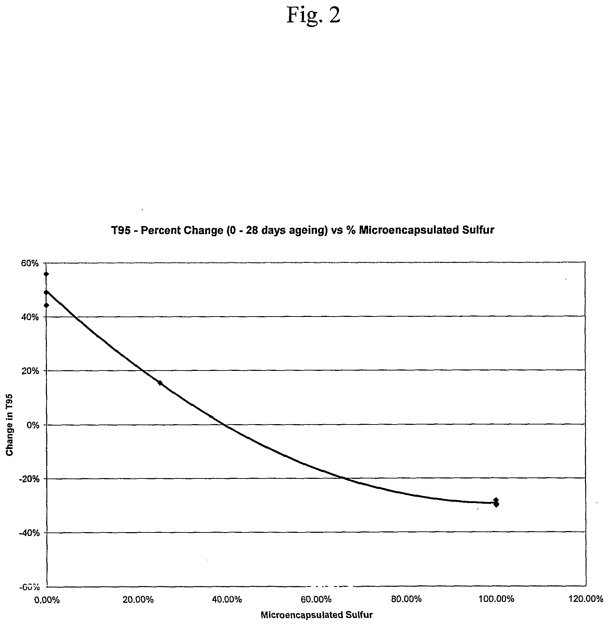

Fig. 2 shows the relationship between the percent microencapsulated sulfur in the rubber compound and its aging behavior as measured by t₉₅. The curve shows that the percent change in t₉₅ after ageing can be adjusted by varying the ratio of microencapsulated sulfur to free sulfur. Compounds with no microencapsulated sulfur exhibit an increase in the t₉₅ of between 40 to 60 % when aged for 28 days. The t₉₅ for a compound containing 100% microencapsulated sulfur was shortened by approximately 30% when compared with the unaged compound. Using this relationship, stable rubber compounds (i.e., compounds with a 0% change in t₉₅ during ageing) can be formulated. This curve shows that a compound containing approximately 40% microencapsulated sulfur and approximately 60% sulfur would be a stable compound and exhibit a 0% change in t₉₅ after aging for 28 days.

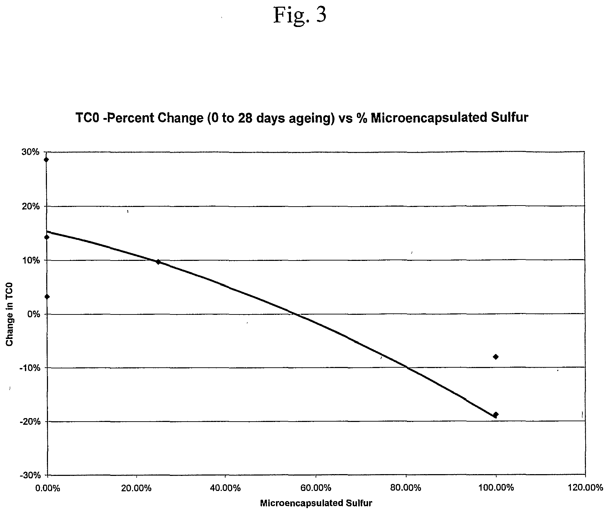

Fig. 3 shows the relationship between the percent microencapsulated sulfur in the rubber compound and its ageing behavior as measured by t₀. t₀ is the time for the initiation of the vulcanization. The curve shows that the percent change in t₀ after ageing can be adjusted by varying the ratio of microencapsulated sulfur to free sulfur. Compounds with no microencapsulated sulfur exhibit an average increase in the t₀ of between 10 to 20 % when aged for 28 days. The t₀ for a compound containing 100% microencapsulated sulfur was shortened by between 10 to 20% when compared with the unaged compound. Using this relationship, stable rubber compounds (i.e., compounds with a 0% change in t₀ during ageing) can be formulated. This curve shows that a compound containing between 40 to 60 % microencapsulated sulfur would be a stable compound and exhibit a 0% change in t₀ after ageing for 28 days.

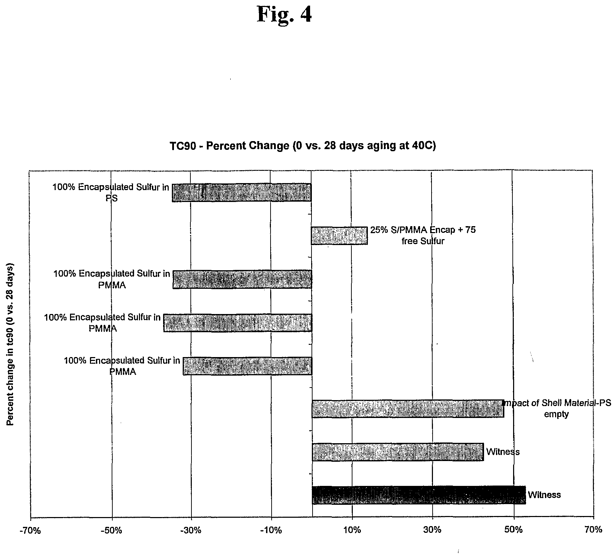

Fig. 4 shows the percentage change in t₉₀ for different rubber compounds after ageing for 28 days. The rubber compounds are formulated with different percentages of microencapsulated sulfur and unencapsulated sulfur. The range for the microencapsulated sulfur is between 0 and 100 %. The range for the unencapsulated sulfur is between 0 and 100%. The sulfur is microencapsulated in two different polymers, polystyrene or PMMA. The bar graph shows that the use of microencapsulated sulfur decreases the t₉₀ during aging of the rubber compound.

The invention will be further understood by reference to the following nonlimiting examples.

### Examples

Below are several examples which show the effect on t₉₀ after an accelerated aging test at 40°C. The examples represent different compositions which are the subject of this invention. Particle sizes were measured using a Malvern Mastersize 2000, Malvern Instruments Ltd., Worcestershire, UK.

A standard (witness) rubber mix was prepared as follows:
(a) 100 parts by weight per hundred parts (phr) rubber;
(b) 40 - 60 phr carbon black;
(c) 0 - 30 phr oil;
(d) 2 - 5 parts zinc oxide;
(e) 1 - 3 part stearic acid;
(f) 1 - 3 parts anti-oxidant
(g) 1 - 3 phr sulfur
(h) 1 - 5 phr ultra accelerator and accelerators

| Example | Description | Relative t₉₀* (Aged 28 days @ 40°C) |
|---|---|---|
| 1 | Compound without encapsulation | 153 |
| 2 | Compound with 25% S/PMMA Microcapsules + 75% Sulfur | 114 |
| 3 | Compound with S/PMMA Microcapsules | 63 |
| 4 | Compound with S/PS | 81 |
| 5 | Compound with empty PS microcapsules | 148 |
| 6 | Compound with 25% S/PMMA Microcapsules + 75% Sulfur | 114 |

| | | |
|---|---|---|
| [* The baseline is 100, that is, no change in t₉₀ with time. The standard compound gives 153 which means the t₉₀ increased 53% during the 28 days of aging.] Legend: S- Sulfur; PMMA - polymethylmethacrylate; PS - polystyrene | | |

Example 1 - This is the rubber compound without encapsulation which shows that on aging for 28 days at 40°C the cure time, as measured by t₉₀, increased 53% The Figure below shows how the rheometer curve changes during aging.

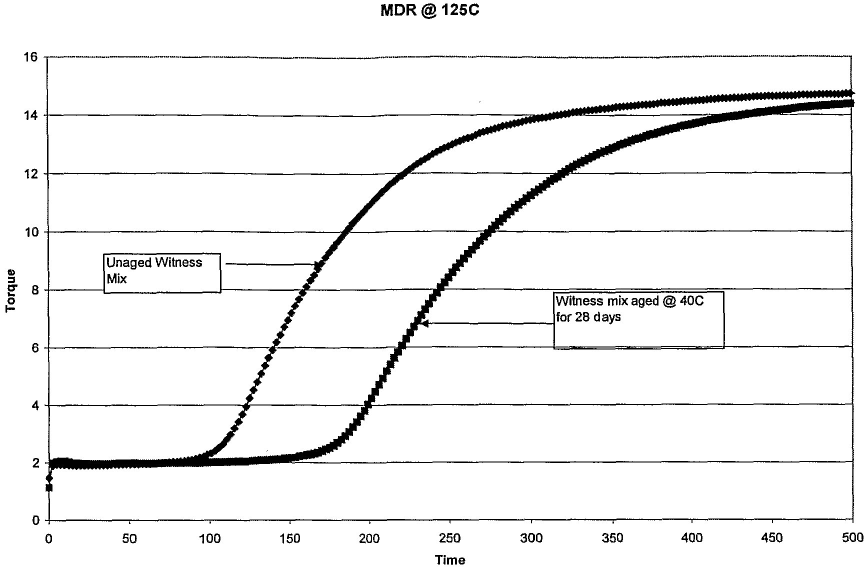

Example 2 (according to the invention) - Sulfur/polymethylmethacrylate microcapsules were prepared using a single emulsion evaporation microencapsulation technique. The microcapsules contained 18.7% sulfur. Differential scanning calorimetry (DSC) showed the microcapsules underwent a thermal transition at 115 - 122 °C. Particle size anlaysis showed the capsules to have 90% of the particle in a size less than 4 microns, D90 = 4µ. Scanning electron microscopy showed the microcapsules to be spherical.

A rubber compound was made which contained the same quantity of sulfur as the standard compound, however 25% of the sulfur was microencapsulated sulfur (S/PMMA) and 75% was free sulfur. Aging of this compound for 2 weeks at 40 °C showed that t₉₀ increased by 14% as compared to the current compound in Example 1 which increased by 53%.

Example 3 - Sulfur/polymethylmethacrylate microcapsules were prepared using a single emulsion evaporation microencapsulation procedure. The microcapsules contained 30% sulfur. Particle size as described by D90 was 30µ.

A rubber compound was made which contained the same quantity of sulfur as the standard compound, however 100% of the sulfur was microencapsulated sulfur (S/PMMA). Aging of this compound for 2 weeks at 40 °C showed a decrease in cure time. The t₉₀ decreased by 37% as compared to compound in Example 1 which increased by 53%.

Example 4 - Sulfur/polystyrene microcapsules were prepared using a single emulsion evaporation microencapsulation procedure. The microcapsules contained 21.9% sulfur. A rubber compound was made which contained the same quantity of sulfur as the standard compound, however 100% of the sulfur was microencapsulated sulfur (S/PS). Aging of this compound for 2 weeks at 40 °C showed that cure time decreased. t₉₀ decreased by 19% as compared to current compound in Example 1 which increased by 53%.

This example illustrates that other polymers that have the correct thermal properties to allow the thermal release and reaction of the active product at temperatures near the rubber curing temperature can be employed as microcapsule shell material.

Example 5 - Polystyrene microcapsules were prepared using a single emulsion evaporation microencapsulation procedure. These microcapsules did not contain any active vulcanizing agent.

A rubber compound was made which contained the same quantity of sulfur as the standard compound, however the empty polystyrene microcapsule were added at a quantity of 3.5 weight percent of the rubber compound. Aging of this compound for 2 weeks at 40 °C showed that cure time increased. t₉₀ increased by 48% as compared to current compound in Example 1 which increased by 53%.

This example illustrates that microcapsules which do not contain any active vulcanizing product has a negligible effect on the stability and cure rate of the compound.

The results in this example can be compared with the results described in Example 6 using sulfur/polystyrene microcapsules. After aging the t₉₀ decreased by 19% for the compound containing the S/PS microcapsules of Example 6 as compared to an increase in t₉₀ 48% for the compound in this example which contained empty polystyrene microcapsules.

Example 6 (according to the invention) - A rubber compound was made which contained the same quantity of sulfur as the standard compound, however 25% of the sulfur was microencapsulated sulfur (S/PMMA) and 75% was free sulfur. (This experiment repeats the procedure of Example 2). The curing behavior of the compound was measured immediately after rubber mixing. This compound showed a t₉₀ of 4.5 minutes as compared to a t₉₀ of 4.54 minutes for the standard which did not contain microencapsulated sulfur. Aging of this compound for 2 weeks at 40 °C showed that t₉₀ increased to 5.13 minutes as compared to current compound in Example 1 which had an increase in t₉₀ to 6.94 minutes.

This example illustrates that a rubber compound containing microencapsulated sulfur can be formulated to have the same initial curing behavior as the standard compound but the use of the microencapsulated sulfur improves the stability of the uncured compound during aging.

## Claims

1. A rubber composition comprising microencapsulated sulfur and free sulfur.

2. The rubber composition of claim 1, wherein the microencapsulation material is a material which is selected with a glass transition temperature, measured using Differential Scanning Calorimetry at a scanning rate of 20°C/min between 30 and 300°C, between 50 degrees Celsius to 170 degrees Celsius.

3. The rubber composition of claim 2, wherein the glass transition temperature is between 70 degrees Celsius to 125 degrees Celsius.

4. The rubber composition of claim 1, wherein the encapsulation material is selected from the group consisting of: waxes, paraffins, polyethylene, carbohydrates, Poly(acetals), Poly (benzoxazoles), Poly(pyrazoles), Poly (acrylics), Poly(methacrylics), Poly(alkenes), Polystyrenes, poly(vinyl alcohols), poly(vinyl ketones), poly(phenylenes), ethylene-vinyl acetate copolymers, and co-polymers and mixtures thereof.

5. The rubber composition of claim 1, wherein the encapsulation material is selected from the group consisting of: Acrylonitrile Butadiene Styrene (ABS), Cellulose Acetate Propionate, Polyamide 66 (Nylon), Polyethylene Terephthalate (PET), Polycarbonate - Polyethylene Terephthalate (PC-PET), Polyethylene Terephthalate Glycol (PETG), Polycyclohexylene methylene Terephthalate Polyester (PCTG), Polyphenylene Sulfide (PPS), Amylose tributyrate, Cellulose, Cellulose laurate, Cellulose triacetate, Gelatin, Poly(1,3-dioxa-4,6-cyclohexylenemethylene), Poly(2-methyl-1,3-dioxa-4,6-cyclohexylenemethylene), Poly(benzoxazole), Poly(4-biphenylyl acrylate), Poly(tertbutyl acrylate), Poly (acrylonitrile methacrylate), poly(hydroxypropyl methacrylate), Poly(2-hydroxyethyl methacrylate), Poly(isopropyl methacrylate) atactic, Poly(isopropyl methacrylate) syndiotactic, Poly(phenyl methacrylate), Poly(3,3,5-trimethylcyclohexyl methacrylate), Poly(cyclohexylethylene), Poly [(cyclohexylmethyl)ethylene)], Poly(cyclopentylethylene), Poly(ispropylethylene) isotactic, Poly(2-chlorostyrene), Poly(3-chlorostyrene), Poly(4-chlorostyrene), Poly(2-ethylstyrene), Poly(3-methylstyrene), Poly(4-acetylstyrene), Poly(4-benzoylstyrene), Poly(5-tert-butyl-2-methylstyrene), Poly(4-sec-butylstyrene), Poly(2,4-dimethylstyrene), Poly(3,4-dimethylstyrene), Poly(3,5-dimethylstyrene), Poly(4-ethoxylstyrene), Poly(3-hydroxy methyl styrene), Poly(4-tert-butylbenzoylethylene), Poly(2,5-dimethyl-1,4-phenylene ethylene), Poly(1,4-phenylene ethylene), polymethyl methacrylate (PMMA), polyvinyl acetate, polyacrylic acid and derivatives, and polyethylene oxide, and co-polymers and mixtures thereof.

6. The rubber composition of claim 1, wherein the encapsulation material is polymethylmethacrylate.

7. The rubber composition of claim 1, further comprising one or more ultra-accelerator curing agents for rubber, wherein the ultra-accelerators are selected from the group consisting of xanthates, dithiocarbamates, thiurams, dithiophosphates, and mixtures thereof.

8. The rubber composition of claim 7, wherein the ultra-accelerators are selected from the group consisting of:
tetramethylthiuram monosulphide (TMTM), tetramethylthiuram disulphide, tetraethylthiuram disulfide (TETD), tetrabenzylthiuram disulfide (TBzTD),
zinc isopropyl xanthate (ZIX), sodium isopropyl xanthate (SIX), zinc butyl xanthate (ZBX), dibutyl xanthogen disulfide, diethyl xanthogenate, diisopropyl xanthogen disulfide, diisobutyl xanthogen disulfide,
zinc-N-dimethyl-dithiocarbamate (ZDMC), zinc-N-diethyldithiocarbamate (ZDEC), zinc-N-dibutyl-dithiocarbamate (ZDBC), zinc-N-ethylphenyl-dithiocarbamate (ZEBC), zinc-N-pentamethylene dithiocarbamate (ZPMC), Piperidine pentamethylene dithiocarbamate (PPD), Sodium diethyl dithiocarbamate (SDC),
copper diisopropyl dithiophosphate, and zinc-O-,O-di-n-butylphosphorodithioate, and mixtures thereof.

9. The rubber composition of claim 1, further comprising one or more accelerator curing agents for rubber.

10. The composition of claim 9, wherein the accelerators are selected from the group consisting of: thiazoles, sulphenamides, guanidines, thiourea derivatives, amine derivatives, and combinations thereof.

11. The composition of claim 10, wherein the accelerators are selected from the group consisting of: benzothiazyl-2-cyclohexyl sulphenamide (CBS), benzothiazoyl-2-tert-butyl sulphenamide (TBBS), 2-mercaptobenzothiazole (MBT), zinc or sodium salt of 2-mercaptobenzothiazole (ZMBT), benzothiazyl-2-sulphene morpholide (MBS), benzothiazyldicyclohexy-1 sulphenamide (DCBS), diphenyl guanidine (DPG), Triphenyl guanidine (TPG), diorthotolyl guanidine (DOTG), o-tolylbigaunide (OTBG), ethylene thiourea (ETU), diethylthiourea (DETU), diphenyl thiourea (DPTU), benzothiazole disulfide (MBTS), hexamethylene tetramine (HMT), ethylidene aniline (EA), and mixtures thereof.

12. The composition of claim 1, further comprising a mixture of accelerator curing agents and ultra-accelerator curing agents.

13. The composition of claim 12, wherein the mixture of accelerator and ultra-accelerator curing agents is present in an amount from more than 0 to about 5 phr by weight of rubber.

14. The rubber composition of claim 1, wherein the rubber is selected from the group consisting of: natural and synthetic rubbers.

15. The rubber composition of claim 14, wherein the rubber is a diene elastomer.

16. The rubber composition of claim 15, wherein,the rubber is selected from the group consisting of: polybutadienes (BR), polyisoprenes (IR), natural rubber (NR), butadiene copolymers, isoprene copolymers and mixtures of these elastomers.

17. The rubber composition of claim 16, wherein the rubber is selected from the group consisting of: butadiene-styrene copolymers (SBR), butadiene-isoprene copolymers (BIR), isoprene-styrene copolymers (SIR) and isoprene-butadiene-styrene copolymers (SBIR).

18. A tire comprising the rubber composition of claim 1.

19. A method of retreading tires comprising the step of application of the rubber composition of claim 1 to a tire carcass or a tire tread to secure the tire tread to the carcass.

20. A method of retreading a tire including a casing comprising the steps of: (a) removing the tread; (b) applying the rubber composition of claim 1 as a cushion gum to the casing.

21. A method of repairing a tire including a defect comprising the application of the rubber composition of claim 1 to a defect in the tire.

22. The rubber composition of claim 1, wherein about 1 to about 5% of the sulfur by weight is encapsulated.

23. The rubber composition of claim 1, wherein about 5 to about 10% of the sulfur by weight is encapsulated.

24. The rubber composition of claim 1, wherein about 10 to about 15% of the sulfur by weight is encapsulated.

25. The rubber composition of claim 1, wherein about 15 to about 20% of the sulfur by weight is encapsulated.

26. The rubber composition of claim 1, wherein about 20 to about 25% of the sulfur by weight is encapsulated.

27. The rubber composition of claim 1, wherein about 25% of the sulfur by weight is encapsulated, and about 75% by weight is not encapsulated.

28. The rubber composition of claim 1, wherein about 25 to about 30% of the sulfur by weight is encapsulated.

29. The rubber composition of claim 1, wherein about 30 to about 35% of the sulfur by weight is encapsulated.

30. The rubber composition of claim 1, wherein about 35 to about 40% of the sulfur by weight is encapsulated.

31. The rubber composition of claim 1, wherein about 40 to about 45% of the sulfur by weight is encapsulated.

32. The rubber composition of claim 1, wherein about 45 to about 50% of the sulfur by weight is encapsulated.

33. The rubber composition of claim 1, wherein about 50 to about 60% of the sulfur by weight is encapsulated.

34. The rubber composition of claim 1, wherein about 60 to about 70% of the sulfur by weight is encapsulated.

35. The rubber composition of claim 1, wherein about 70 to about 80% of the sulfur by weight is encapsulated.

36. The rubber composition of claim 1, wherein about 80 to about 90% of the sulfur by weight is encapsulated.

37. The rubber composition of claim 1, wherein about 90 to about 95% of the sulfur by weight is encapsulated.

38. The rubber composition of claim 1, wherein between about 40% to about 15% of the sulfur by weight is encapsulated.

39. The rubber composition of claim 1, wherein between about 30% to about 20% of the sulfur by weight is encapsulated.

40. A cushion gum comprising the rubber composition of claim 1.

41. A method of repairing a rubber article comprising the step of application of the rubber composition of claim 1 to a defect in the rubber article.

42. The method of claim 41, wherein the rubber article is selected from the group consisting of tires, belts, tracks, and hoses.

43. The rubber composition of claim 1 further comprising a mixture of primary, secondary, and tertiary accelerators.

## Patentansprüche

1. Kautschukzusammensetzung aus mikroverkapseltem Schwefel und freiem Schwefel.

2. Kautschukzusammensetzung nach Anspruch 1, wobei das Mikroverkapselungsmaterial ein Material ist, das mit einer mittels Differentialscanningkalorimetrie bei einer Abtastrate von 20°C/min zwischen 30 und 300°C gemessenen Glasübergangstemperatur zwischen 50°C und 170°C ausgewählt ist.

3. Kautschukzusammensetzung nach Anspruch 2, wobei die Glasübergangstemperatur zwischen 70°C und 125°C liegt.

4. Kautschukzusammensetzung nach Anspruch 1, wobei das Verkapselungsmaterial aus der Gruppe ausgewählt ist, die Folgendes umfasst: Wachse, Paraffine, Polyethylen, Kohlehydrate, Poly(acetale), Poly(benzoxazole), Poly(pyrazole), Poly(acryle), Poly(methacryle), Poly(alkene), Polystyrole, Poly(vinylalkohole), Poly(vinylketone), Poly(phenylene), Ethylen-Vinylacetat-Copolymere sowie Copolymere und Mischungen davon.

5. Kautschukzusammensetzung nach Anspruch 1, wobei das Verkapselungsmaterial aus der Gruppe ausgewählt ist, die Folgendes umfasst: Acrylnitril-Butadien-Styrol (ABS), Celluloseacetatpropionat, Polyamid 66 (Nylon), Polyethylenterephthalat (PET), Polycarbonat-Polyethylenterephthalat (PC-PET), Polyethylenterephthalatglycol (PETG), Polycyclohexylenmethylenterephthalatpolyester (PCTG), Polyphenylensulfid (PPS), Amylosetributyrat, Cellulose, Celluloselaurat, Cellulosetriacetat, Gelatine, Poly(1,3-dioxa-4,6-cyclohexylenmethylen), Poly(2-methyl-1,3-dioxa-4,6-cyclohexylenmethylen), Poly(benzoxazol), Poly(4-biphenylylacrylat), Poly(tert-butylacrylat), Poly(acrylnitrilmethacrylat), Poly(hydroxypropylmethacrylat), Poly(2-hydroxyethylmethacrylat), ataktisches Poly(isopropylmethacrylat), syndiotaktisches Poly(isopropylmethacrylat), Poly(phenylmethacrylat), Poly(3,3,5-trimethylcyclohexylmethacrylat), Poly(cyclohexylethylen), Poly[(cyclohexylmethyl)ethylen], Poly(cyclopentylethylen), isotaktisches Poly(isopropylethylen), Poly(2-chlorstyrol), Poly(3-chlorstyrol), Poly(4-chlorstyrol), Poly(2-ethylstyrol), Poly(3-methylstyrol), Poly(4-acetylstyrol), Poly(2-ethylstyrol), Poly(3-methylstyrol), Poly(4-acetylstyrol), Poly(4-benzoylstyrol), Poly(5-tert-butyl-2-methylstyrol), Poly(4-sec-butylstyrol), Poly(2,4-dimethylstyrol), Poly(3,4-dimethylstyrol), Poly(3,5-dimethylstyrol), Poly(4-ethoxylstyrol), Poly(3-hyroxymethylstyrol), Poly(4-tert-butylbenzoylethylen), Poly(2,5-dimethyl-1,4-phenylenethylen), Poly(1,4-phenylenethylen), Polymethylmethacrylat (PMMA), Polyvinylacetat, Polyacrylsäure und Derivate und Polyethylenoxid sowie Copolymere und Mischungen davon.

6. Kautschukzusammensetzung nach Anspruch 1, wobei das Verkapselungsmaterial Polymethylmethacrylat ist.

7. Kautschukzusammensetzung nach Anspruch 1, ferner umfassend ein oder mehrere ultrabeschleunigende Härtungsmittel für Kautschuk, wobei die Ultrabeschleuniger aus der aus Xanthaten, Dithiocarbamaten, Thiuramen, Dithiophosphaten und Mischungen davon bestehenden Gruppe ausgewählt sind.

8. Kautschukzusammensetzung nach Anspruch 7, wobei die Ultrabeschleuniger aus der Gruppe ausgewählt sind, die Folgendes umfasst: Tetramethylthiurammonosulfid (TMTM), Tetramethylthiuramdisulfid, Tetraethylthiuramdisulfid (TETD), Tetrabenzylthiuramdisulfid (TBzTD),
Zinkisopropylxanthat (ZIX), Natriumisopropylxanthat (SIX), Zinkbutylxanthat (ZBX), Dibutylxanthogendisulfid, Diethylxanthogenat, Diisopropylxanthogendisulfid, Diisobutylxanthogendisulfid,
Zink-N-dimethyldithiocarbamat (ZDMC), Zink-N-diethyldithiocarbamat (ZDEC), Zink-N-dibutyldithiocarbamat (ZDBC), Zink-N-ethylphenyl-dithiocarbamat (ZEBC), Zink-N-pentamethylendithiocarbamat (ZPMC), Piperidinpentamethylendithiocarbamat (PPD), Natriumdiethyldithiocarbamat (SDC),
Kupferdiisopropyldithiophosphat und Zink-O-,O-di-n-butylphosphordithioat und Mischungen davon.

9. Kautschukzusammensetzung nach Anspruch 1, ferner umfassend ein oder mehrere beschleunigende Härtungsmittel für Kautschuk.

10. Zusammensetzung nach Anspruch 9, wobei die Beschleuniger ausgewählt sind aus der Gruppe, die Folgendes umfasst: Thiazole, Sulfenamide, Guanidine, Thioharnstoffderivate, Aminderivate und Kombinationen davon.

11. Zusammensetzung nach Anspruch 10, wobei die Beschleuniger ausgewählt sind aus der Gruppe, die Folgendes umfasst: Benzothiazyl-2-cyclohexylsulfenamid (CBS), Benzothiazoyl-2-tert-butylsulfenamid (TBBS), 2-Mercaptobenzothiazol (MBT), Zink- oder Natriumsalz von 2-Mercaptobenzothiazol (ZMBT), Benzothioazyl-2-sulfenmorpholid (MBS), Benzothioazyldicyclohexyl-1-sulfenamid (DCBS), Diphenylguanidin (DPG), Triphenylguanidin (TPG), Diorthotolylguanidin (DOTG), o-Tolylbiguanid (OTBG), Ethylenthioharnstoff (ETU), Diethylthioharnstoff (DETU), Diphenylthioharnstoff (DPTU), Benzothiazoldisulfid (MBTS), Hexamethylentetramin (HMT), Ethylidenanilin (EA) und Mischungen davon.

12. Zusammensetzung nach Anspruch 1, ferner umfassend eine Mischung von beschleunigenden Härtungsmitteln und ultrabeschleunigenden Härtungsmitteln.

13. Zusammensetzung nach Anspruch 12, wobei die Mischung von beschleunigenden und ultrabeschleunigenden Härtungsmitteln in einer Menge von mehr als 0 bis etwa 5 phr bezogen auf das Gewicht des Kautschuks vorliegt.

14. Kautschukzusammensetzung nach Anspruch 1, wobei der Kautschuk aus der aus Naturkautschuk und synthetischem Kautschuk bestehenden Gruppe ausgewählt ist.

15. Kautschukzusammensetzung nach Anspruch 14, wobei der Kautschuk ein Dienelastomer ist.

16. Kautschukzusammensetzung nach Anspruch 15, wobei der Kautschuk aus der aus der Gruppe ausgewählt ist, die Folgendes umfasst: Polybutadiene (BR), Polyisoprene (IR), Naturkautschuk (NR), Butadiencopolymere, Isoprencopolymere und Mischungen dieser Elastomere.

17. Kautschukzusammensetzung nach Anspruch 16, wobei der Kautschuk aus der Gruppe ausgewählt ist, die Folgendes umfasst: Butadien-Styrol-Copolymere (SBR), Butadien-Isopren-Copolymere (BIR), Isopren-Styrol-Copolymere (SIR) und Isopren-Butadien-Styrol-Copolymere (SBIR).

18. Reifen aus der Kautschukzusammensetzung nach Anspruch 1.

19. Verfahren zum Runderneuern von Reifen mit dem Schritt des Aufbringens der Kautschukzusammensetzung nach Anspruch 1 auf eine Reifenkarkasse oder eine Reifenlauffläche, um die Reifenlauffläche an der Karkasse zu befestigen.

20. Verfahren zum Runderneuern eines Reifens mit einem Unterbau mit den folgenden Schritten: (a) Entfernen der Lauffläche; (b) Aufbringen der Kautschukzusammensetzung nach Anspruch 1 als Polstergummi auf den Unterbau.

21. Verfahren zum Reparieren eines Reifens mit einem Defekt, bei dem die Kautschukzusammensetzung nach Anspruch 1 auf einen Defekt in dem Reifen aufgebracht wird.

22. Kautschukzusammensetzung nach Anspruch 1, wobei etwa 1 bis etwa 5 Gew.-% Schwefel verkapselt sind.

23. Kautschukzusammensetzung nach Anspruch 1, wobei etwa 5 bis etwa 10 Gew.-% Schwefel verkapselt sind.

24. Kautschukzusammensetzung nach Anspruch 1, wobei etwa 10 bis etwa 15 Gew.-% Schwefel verkapselt sind.

25. Kautschukzusammensetzung nach Anspruch 1, wobei etwa 15 bis etwa 20 Gew.-% Schwefel verkapselt sind.

26. Kautschukzusammensetzung nach Anspruch 1, wobei etwa 20 bis etwa 25 Gew.-% Schwefel verkapselt sind.

27. Kautschukzusammensetzung nach Anspruch 1, wobei etwa 25 Gew.-% Schwefel verkapselt sind und etwa 75 Gew.-% nicht verkapselt sind.

28. Kautschukzusammensetzung nach Anspruch 1, wobei etwa 25 bis etwa 30 Gew.-% Schwefel verkapselt sind.

29. Kautschukzusammensetzung nach Anspruch 1, wobei etwa 30 bis etwa 35 Gew.-% Schwefel verkapselt sind.

30. Kautschukzusammensetzung nach Anspruch 1, wobei etwa 35 bis etwa 40 Gew.-% Schwefel verkapselt sind.

31. Kautschukzusammensetzung nach Anspruch 1, wobei etwa 40 bis etwa 45 Gew.-% Schwefel verkapselt sind.

32. Kautschukzusammensetzung nach Anspruch 1, wobei etwa 45 bis etwa 50 Gew.-% Schwefel verkapselt sind.

33. Kautschukzusammensetzung nach Anspruch 1, wobei etwa 50 bis etwa 60 Gew.-% Schwefel verkapselt sind.

34. Kautschukzusammensetzung nach Anspruch 1, wobei etwa 60 bis etwa 70 Gew.-% Schwefel verkapselt sind.

35. Kautschukzusammensetzung nach Anspruch 1, wobei etwa 70 bis etwa 80 Gew.-% Schwefel verkapselt sind.

36. Kautschukzusammensetzung nach Anspruch 1, wobei etwa 80 bis etwa 90 Gew.-% Schwefel verkapselt sind.

37. Kautschukzusammensetzung nach Anspruch 1, wobei etwa 90 bis etwa 95 Gew.-% Schwefel verkapselt sind.

38. Kautschukzusammensetzung nach Anspruch 1, wobei zwischen etwa 40 bis etwa 15 Gew.-% Schwefel verkapselt sind.

39. Kautschukzusammensetzung nach Anspruch 1, wobei zwischen etwa 30 bis etwa 20 Gew.-% Schwefel verkapselt sind.

40. Polstergummi aus der Kautschukzusammensetzung nach Anspruch 1.

41. Verfahren zum Reparieren eines Kautschukartikels mit dem Schritt des Aufbringens der Kautschukzusammensetzung nach Anspruch 1 auf einen Defekt in dem Kautschukartikel.

42. Verfahren nach Anspruch 41, wobei der Kautschukartikel aus der aus Reifen, Riemen, Raupenketten und Schläuchen bestehenden Gruppe ausgewählt ist.

43. Kautschukzusammensetzung nach Anspruch 1, ferner umfassend eine Mischung aus primären, sekundären und tertiären Beschleunigern.

## Revendications

1. Composition de caoutchouc comprenant du soufre enfermé dans des microcapsules et du soufre libre.

2. Composition de caoutchouc conforme à la revendication 1, dans laquelle le matériau des microcapsules est un matériau qui est choisi en tant que présentant une température de transition vitreuse qui, mesurée par analyse enthalpique différentielle avec une vitesse de balayage de 20 °C/min, est située entre 30 et 300 °C, ou entre 50 et 170 °C.

3. Composition de caoutchouc conforme à la revendication 2, dans laquelle ladite température de transition vitreuse vaut entre 70 et 125 °C.

4. Composition de caoutchouc conforme à la revendication 1, dans laquelle le matériau des capsules est choisi dans l'ensemble formé par les cires, paraffines, polyéthylènes, hydrates de carbone, polyacétals, polybenzoxazoles, polypyrazoles, polyacryliques, polyméthacryliques, polyalcènes, polystyrènes, poly(alcool vinylique), poly(vinylcétone), polyphénylènes et copolymères d'éthylène et d'acétate de vinyle, leurs copolymères et leurs mélanges.

5. Composition de caoutchouc conforme à la revendication 1, dans laquelle le matériau des capsules est choisi dans l'ensemble formé par les suivants : poly(acrylonitrile butadiène styrène) ou ABS, acétatepropionate de cellulose, polyamide 66 ou Nylon, poly(éthylène téréphtalate) ou PET, polycarbonate-poly(éthylène téréphtalate) ou PC-PET, poly(éthylène téréphtalate)-glycol ou PETG, polyester poly(cyclohexylène méthylène téréphtalate) ou PCTG, poly(sulfure de phénylène) ou PPS, tributyrate d'amylose, cellulose, laurate de cellulose, triacétate de cellulose, gélatine, poly(1,3-dioxa-4,6-cyclohexylène-méthylène), poly(2-méthyl-1,3-dioxa-4,6-cyclohexylène-méthylène), polybenzoxazole, poly(acrylate de 4-biphénylyle), poly(acrylate de tertiobutyle), poly(acrylonitrile méthacrylate), poly(méthacrylate d'hydroxy-propyle), poly(méthacrylate de 2-hydroxy-éthyle), poly(méthacrylate d'isopropyle) atactique, poly(méthacrylate d'isopropyle) syndiotactique, poly-(méthacrylate de phényle), poly(méthacrylate de 3,3,5-triméthyl-cyclohexyle), poly(cyclohexyl-éthylène), poly((cyclohexyl-méthyl)-éthylène), poly(cyclopentyl-éthylène), poly(isopropyl-éthylène) isotactique, poly-(2-chloro-styrène), poly(3-chloro-styrène), poly(4-chloro-styrène), poly(2-éthyl-styrène), poly(3-méthyl-styrène), poly(4-acétyl-styrène), poly(4-benzoyl-styrène), poly(5-tertiobutyl-2-méthyl-styrène), poly-(4-*sec*-butyl-styrène), poly(2,4-diméthyl-styrène), poly(3,4-diméthyl-styrène), poly(3,5-diméthyl-styrène), poly(4-éthoxy-styrène), poly-(3-hydroxyméthyl-styrène), poly(4-tertiobutyl-benzoyl-éthylène), poly-(2,5-diméthyl-1,4-phénylène-éthylène), poly(1,4-phénylène-éthylène), poly(méthacrylate de méthyle) ou PMMA, poly(acétate de vinyle), poly(acide acrylique) et dérivés, et poly(phénylène oxyde), leurs copolymères et leurs mélanges.

6. Composition de caoutchouc conforme à la revendication 1, dans laquelle le matériau des capsules est un poly(méthacrylate de méthyle).

7. Composition de caoutchouc conforme à la revendication 1, qui comprend en outre un ou plusieurs ultra-accélérateur(s) de durcissement du caoutchouc, lequel ou lesquels ultra-accélérateur(s) est ou sont choisi(s) dans l'ensemble formé par les xanthates, dithiocarbamates, thiurames et dithiophosphates, et leurs mélanges.

8. Composition de caoutchouc conforme à la revendication 7, dans laquelle le ou les ultra-accélérateur(s) est ou sont choisi(s) dans l'ensemble formé par les suivants : monosulfure de tétraméthyl-thiurame (TMTM), disulfure de tétraméthyl-thiurame, disulfure de tétra-éthyl-thiurame (TETD), disulfure de tétrabenzyl-thiurame (TBzTD), isopropyl-xanthate de zinc (ZIX), isopropyl-xanthate de sodium (SIX), butyl-xanthate de zinc (ZBX), disulfure de dibutyl-xanthogène, xanthogénate de diéthyle, disulfure de diosopropyl-xanthogène, disulfure de diisobutyl-xanthogène, N-diméthyl-dithiocarbamate de zinc (ZDMC), N-diéthyl-dithiocarbamate de zinc (ZDEC), N-dibutyl-dithiocarbamate de zinc (ZDBC), N-éthylphényl-dithiocarbamate de zinc (ZEPC), N-pentaméthylène-dithiocarbamate de zinc (ZPMC), pentaméthylène-dithiocarbamate de pipéridine (PPD), diéthyl-dithiocarbamate de sodium (SDC), diisopropyl-dithiophosphate de cuivre et O,O-di-n-butyl-phosphorodithioate de zinc, et leurs mélanges.

9. Composition de caoutchouc conforme à la revendication 1, qui comprend en outre un ou plusieurs accélérateur(s) de durcissement du caoutchouc.

10. Composition conforme à la revendication 9, dans laquelle le ou les accélérateur(s) est ou sont choisi(s) dans l'ensemble formé par les thiazoles, sulfénamides, guanidines, dérivés de thiourée et dérivés d'amine, et leurs combinaisons.

11. Composition conforme à la revendication 10, dans laquelle le ou les accélérateur(s) est ou sont choisi(s) dans l'ensemble formé par les suivants : benzothiazole-2-(cyclohexyl-sulfénamide) (CBS), benzothiazole-2-(tertiobutyl-sulfénamide) (TBBS), 2-mercapto-benzothiazole (MBT), sel de sodium ou de zinc (ZMBT) de 2-mercaptobenzothiazole, benzothiazole-2-(sulfène morpholide) (MBS), benzothiazole-(dicyclohexyl-sulfénamide) (DCBS), diphényl-guanidine (DPG), triphényl-guanidine (TPG), diorthotolyl-guanidine (DOTG), o-tolyl-biguanide (OTBG), éthylène-thiourée (ETU), diéthyl-thiourée (DETU), diphényl-thiourée (DPTU), disulfure de benzothiazole (MBTS), hexaméthylène-tétramine (HMT) et éthylidène-aniline (EA), et leurs mélanges.

12. Composition conforme à la revendication 1, qui comprend en outre un mélange d'accélérateur(s) de durcissement et d'ultra-accélérateur(s) de durcissement.

13. Composition conforme à la revendication 12, dans laquelle le mélange d'accélérateur(s) et d'ultra-accélérateur(s) de durcissement se trouve présent en une proportion qui vaut de plus de 0 à environ 5 pcpc (parties pour cent parties en poids de caoutchouc).

14. Composition de caoutchouc conforme à la revendication 1, dans laquelle le caoutchouc est choisi dans l'ensemble formé par les caoutchoucs naturels et synthétiques.

15. Composition de caoutchouc conforme à la revendication 14, dans laquelle le caoutchouc est un élastomère de diène.

16. Composition de caoutchouc conforme à la revendication 15, dans laquelle le caoutchouc est choisi dans l'ensemble formé par les polybutadiènes (BR), les polyisoprènes (IR), le caoutchouc naturel (NR), les copolymères de butadiène, les copolymères d'isoprène, et les mélanges de ces élastomères.

17. Composition de caoutchouc conforme à la revendication 16, dans laquelle le caoutchouc est choisi dans l'ensemble formé par les copolymères de butadiène et de styrène (SBR), les copolymères de butadiène et d'isoprène (BIR), les copolymères d'isoprène et de styrène (SIR), et les copolymères de butadiène, d'isoprène et de styrène (SBIR).

18. Pneumatique comprenant une composition de caoutchouc conforme à la revendication 1.

19. Procédé de rechapage de pneumatiques, comportant une étape où l'on applique une composition de caoutchouc, conforme à la revendication 1, sur une carcasse de pneumatique ou une bande de roulement de pneumatique afin de bien attacher la bande de roulement de pneumatique à la carcasse.

20. Procédé de rechapage d'un pneumatique comprenant une enveloppe, comportant les étapes suivantes :
a) enlever la bande de roulement,
b) appliquer sur l'enveloppe une composition de caoutchouc conforme à la revendication 1, en guise de gomme de coussin protecteur.

21. Procédé de réparation de pneumatiques ayant un défaut, comportant l'application d'une composition de caoutchouc, conforme à la revendication 1, au niveau d'un défaut du pneumatique.

22. Composition de caoutchouc conforme à la revendication 1, dans laquelle il y a d'environ 1 à environ 5 % en poids du soufre qui est encapsulé.

23. Composition de caoutchouc conforme à la revendication 1, dans laquelle il y a d'environ 5 à environ 10 % en poids du soufre qui est encapsulé.

24. Composition de caoutchouc conforme à la revendication 1, dans laquelle il y a d'environ 10 à environ 15 % en poids du soufre qui est encapsulé.

25. Composition de caoutchouc conforme à la revendication 1, dans laquelle il y a d'environ 15 à environ 20 % en poids du soufre qui est encapsulé.

26. Composition de caoutchouc conforme à la revendication 1, dans laquelle il y a d'environ 20 à environ 25 % en poids du soufre qui est encapsulé.

27. Composition de caoutchouc conforme à la revendication 1, dans laquelle il y a environ 25 % en poids du soufre qui est encapsulé et environ 75 % en poids du soufre qui n'est pas encapsulé.

28. Composition de caoutchouc conforme à la revendication 1, dans laquelle il y a d'environ 25 à environ 30 % en poids du soufre qui est encapsulé.

29. Composition de caoutchouc conforme à la revendication 1, dans laquelle il y a d'environ 30 à environ 35 % en poids du soufre qui est encapsulé.

30. Composition de caoutchouc conforme à la revendication 1, dans laquelle il y a d'environ 35 à environ 40 % en poids du soufre qui est encapsulé.

31. Composition de caoutchouc conforme à la revendication 1, dans laquelle il y a d'environ 40 à environ 45 % en poids du soufre qui est encapsulé.

32. Composition de caoutchouc conforme à la revendication 1, dans laquelle il y a d'environ 45 à environ 50 % en poids du soufre qui est encapsulé.

33. Composition de caoutchouc conforme à la revendication 1, dans laquelle il y a d'environ 50 à environ 60 % en poids du soufre qui est encapsulé.

34. Composition de caoutchouc conforme à la revendication 1, dans laquelle il y a d'environ 60 à environ 70 % en poids du soufre qui est encapsulé.

35. Composition de caoutchouc conforme à la revendication 1, dans laquelle il y a d'environ 70 à environ 80 % en poids du soufre qui est encapsulé.

36. Composition de caoutchouc conforme à la revendication 1, dans laquelle il y a d'environ 80 à environ 90 % en poids du soufre qui est encapsulé.

37. Composition de caoutchouc conforme à la revendication 1, dans laquelle il y a d'environ 90 à environ 95 % en poids du soufre qui est encapsulé.

38. Composition de caoutchouc conforme à la revendication 1, dans laquelle il y a entre environ 40 % et environ 15 % en poids du soufre qui est encapsulé.

39. Composition de caoutchouc conforme à la revendication 1, dans laquelle il y a entre environ 30 % et environ 20 % en poids du soufre qui est encapsulé.

40. Gomme de coussin protecteur, comprenant une composition de caoutchouc conforme à la revendication 1.

41. Procédé de réparation d'un article en caoutchouc, comportant une étape où l'on applique une composition de caoutchouc, conforme à la revendication 1, au niveau d'un défaut présent dans l'article en caoutchouc.

42. Procédé conforme à la revendication 41, dans lequel l'article en caoutchouc est choisi dans l'ensemble formé par les pneumatiques, les courroies, les chenilles et les tuyaux.

43. Composition de caoutchouc conforme à la revendication 1, qui comprend en outre un mélange d'accélérateurs primaire, secondaire et tertiaire.
